# EUROPEAN PATENT APPLICATION

(11) **EP 3 664 384 A1**
(43) Date of publication of application: **10.06.2020**
(21) Application number: 18210278.0
(22) Date of filing: 04.12.2018
(51) Int. Cl.: H04L 12/58

(54) **NETWORK MESSAGE FALLBACK AND DEDUPLICATION**

(71) Applicant: T-Mobile USA, Inc., Bellevue, WA 98006-1350 (US)
(72) Inventor: RAVICHANDRAN, Vinod, Bellevue, WA Washington 98006-1350 (US)
(74) Representative: Hanna Moore + Curley

(57) **Abstract**

In some examples, a network terminal sends a message comprising message data via non-standalone messaging. The message is addressed from a first user and is addressed to a second user. The terminal receives first error data indicating a failure associated with sending the message. In response to receiving the first error data, the terminal sends an alternative version of the message via standalone messaging, the alternative version of the message comprising the message data. In some examples, the terminal receives a first version of a message, the first version of the message associated with first message data. Subsequently, the terminal receives a second version of the message, the second version of the message associated with second message data. The terminal initiates retrieval of the first message data. In some examples, the retrieval fails, and the terminal downloads the second message data and stores it as first downloaded content.

## Description

### BACKGROUND

Chat and messaging have become ubiquitous in modern-day communications between many computing devices configured for telecommunications, such as smartphones and Internet Protocol (IP)-based terminals, that are capable of sending and receiving various types of messages and interacting with various network services in addition to voice telephone calls. Transmission of messages via such devices is not always successful due to network- or messaging-session timeouts, a network not being reachable or dropped connection, low-speed connections, Session Initiation Protocol (SIP) errors as set forth in RFC 3261, Message Session Relay Protocol (MSRP) errors as set forth in RFC 4975, or other termination. Existing attempts to address message failure have been limited to an individual operating platform and the devices and instant messaging product of that company, i.e., APPLE's IMESSAGE. Moreover, if an IMESSAGE fails, the sending user has to initiate resending either through IMESSAGE or Short Message Service (SMS) or has to have already activated a feature to retry with SMS in the IMESSAGE settings.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items. For brevity of illustration, in the diagrams herein, an arrow beginning with a diamond connects a first component or operation (at the diamond end) to at least one second component or operation that is or can be included in the first component or operation.
FIG. 1 is a block diagram illustrating a system including components for implementing deduplication or fallback techniques to increase success when sending and receiving real-time messages according to some examples.
FIG. 2 is a block diagram of components of a messaging system configured to perform fallback or deduplication.
FIG. 3 illustrates an example process using fallback techniques to increase success when sending real-time messages, e.g., with respect to a network terminal.
FIG. 4 illustrates an example process for sending messages.
FIG. 5 illustrates example processes for sending messages.
FIG. 6 illustrates an example process using fallback techniques to increase success when receiving real-time messages, e.g., with respect to a network terminal.
FIG. 7 illustrates example processes of message deduplication for use with some implementations of fallback techniques to increase success when sending and receiving real-time messages.
FIG. 8 illustrates an example process using deduplication techniques to decrease network or storage load, e.g., with respect to a network terminal.
FIG. 9 illustrates example processes of fallback and message deduplication for receiving messages.

### DETAILED DESCRIPTION

### OVERVIEW

Some example systems and techniques described herein permit improvement of transmission success when sending and receiving real-time messages by automatically employing fallback techniques independent of the operating system of the sending or destination terminal. Some example systems and techniques described herein automatically perform deduplication if duplicate messages are received, which in some cases may be due to employment of fallback techniques such as those described herein.

As used herein, a "terminal" is a communication device configured to perform, or communicate with systems configured to perform, techniques described herein. Terminals can include, e.g., wireless voice- communication devices or data-communication devices such as a cellular telephone, smart phone, tablet computer, other user equipment (UE), etc. Terminals include various user interfaces such as screens for presenting graphical user interfaces (GUIs), speakers for presenting audio output, and input devices touch-screens, associated keyboards, microphones, etc. As used herein a "server" is a computing device configured to facilitate communication between two or more terminals according to the techniques described herein in some examples. A "destination terminal" is a terminal that receives a message, to which a message is addressed, or that is associated with a user to whom a message is addressed.

The term "network session" as used herein includes a communications path for bidirectional exchange of data between or among two or more terminals. Example network sessions include voice and video calls, e.g., by which human beings converse, instant-messaging conversations, or data communication sessions, e.g., between two electronic systems or between an electronic system and a human being. A network session can include, e.g., transmission of content in one direction, and transmission of acknowledgement or handshake data in the other direction.

Messages can be transmitted via non-standalone messaging ("NSAM"), standalone messaging ("SAM"), or notifications (e.g., push notifications). NSAM can include, e.g., an exchange in which multiple terminals are able to send messages in a common network-mediated conversation. SAM can include, e.g., transmission of a message from one terminal to another terminal outside the context of a network-mediated conversation, or without requiring the existence of such a conversation. Push notification can include, e.g., an unsolicited or polled-for transmission from a network server to a terminal including a message being forwarded by the network server. In some examples, NSAM and SAM are facilitated by a carrier's network, e.g., using SIP-based protocols, and push notifications are transmitted via over-the-top (OTT) services, e.g., using REST-based protocols from a push-notification server to terminal 104.

Examples of network sessions can include NSAM sessions, e.g., instant-messaging (IM) session-mode messaging (SMM) sessions as defined in the Converged IP Messaging (CPM) specification as CPM session mode, in the SIP for Instant Messaging and Presence Leveraging Extensions (SIMPLE) specification as IM session mode, or in other IM specifications. NSAM can be implemented in a Rich Communication Suite (RCS) network component of an IP Multimedia Subsystem (IMS) network. Various examples of NSAM can include services provided by JOYN, WHATSAPP, or SKYPE. Some examples of NSAM can provide one-to-one or group messaging with emoticons; file sharing including video, image, audio, etc.; or other features in addition to or instead of plain-text message exchange. Some examples of NSAM can exchange media of a messaging session using, e.g., the Real-time Transport Protocol (RTP) or MSRP. As used herein, an "NSAM session" is a network session permitting bidirectional transfer of content between or among multiple terminals using NSAM protocols.

Other example network sessions can include or support file transfers or large-message transfers, e.g., as defined in the CPM standalone large-message mode specification or the SIMPLE IM large-message mode specification (individually or collectively, SAM). For example, a network session can be established between two terminals, and a SIP dialog can be set up across that network session. The file or large-message content can then be transferred as media within that dialog, e.g., over an MSRP connection. In some examples of SAM messaging (e.g., CPM standalone-mode or SIMPLE pager or large-message mode), the SIP dialog and the network session are torn down after a single file or large message has been transferred. Consequently, SAM may involve a network session, but not an NSAM (messaging) session.In addition to file transfers or large-message transfers, SAM can also include Pager (or "Page") messaging (PMM) in some examples. PMM, and other similar forms of SAM, can include the transfer of messages without establishing an NSAM session, and with or without establishing a network session. For example, CPM standalone pager-mode messaging and SIMPLE IM pager-mode messaging transfer the content of a single message in a SIP MESSAGE request. This request is carried over a network session, but does not establish a SIP dialog or NSAM session. Other examples of SAM can include SMS and Multimedia Messaging Service (MMS), or other services that may or may not establish a network session or a SIP dialog, depending on the specific networks and interworking facilities over which a standalone message is transmitted. Some examples of SAM messaging described herein exclude MMS, exclude SMS, or exclude both MMS and SMS. Some examples of SAM messaging include only RCS SAM protocols. Some examples of SAM messaging can include all of RCS LMM, RCS PMM, MMS, and SMS.

Some example systems and techniques described herein can implement fallback techniques across messaging types to increase success when sending and receiving real-time (including near-real-time, and likewise throughout) messages. In some examples, the fallback procedure is facilitated by the network or a server transparently to the communicating terminals. In some examples, the fallback procedure is facilitated by the sending terminal transparently to a user of the sending terminal. In some examples, the network or server, or a terminal, implements deduplication techniques as described herein so that fallback techniques do not result in the user seeing the same message more than once.

Example networks carrying network sessions include second-generation (2G) cellular networks such as the Global System for Mobile Communications (GSM) and third-generation (3G) cellular networks such as the Universal Mobile Telecommunications System (UMTS). Other example networks include fourth-generation (4G) cellular networks, such as Long Term Evolution (LTE) cellular networks carrying voice over LTE (VoLTE) sessions using SIP signaling, the public switched telephone network (PSTN) using Signaling System 7 (SS7) signaling, and data networks, such as Institute of Electrical and Electronics Engineers (IEEE) 802.11 (WIFI) networks carrying voice over Internet Protocol (VoIP) calls or other OTT sessions encapsulating, e.g., voice or video data in a way transparent to an underlying packet transport. GSM and the PSTN are examples of circuit-switched (CS) networks; LTE and WIFI are examples of packet-switched (PS) networks.

A terminal in a mobile-radio system can be configured to include or access control logic for implementing fallback and/or deduplication techniques as described herein. For example, a mobile operator or original equipment manufacturer (OEM) can provision these techniques in a terminal, e.g., via download of an application such as a program or mobile app, or via access to a decentralized application (DApp) to implement the techniques.

A sending terminal can send a message including message data, e.g., via NSAM, to one or more recipients. If delivery of the message fails to one, ≥1 of, some of, or all of the recipient(s) (in various examples), the terminal or server that received the error can automatically initiate a fallback procedure. Failure can be identified by, e.g., the server or the sending terminal receiving an error code, or failing to receive a response within a predetermined time limit. The fallback procedure can include sending a copy of the message that failed via NSAM, and/or sending (or causing to be sent) a second (or alternative) version of the message via a different messaging mode, e.g., via SAM. In some instances, the fallback procedure initiates sending the second version of the message via a different messaging mode responsive to delivery of the copy also failing.

In the event that the second version fails, the fallback system can cause notification of the failure on or at the sending terminal, e.g., via a presentation of a graphical user interface, an audio signal, etc. The notification of the failure can include a prompt for input to initiate sending a second copy of the message. That is, the second copy of the message can be sent after delivery of the second version of the message fails. In various examples, the second copy of the message can be sent via NSAM or SAM, e.g., via SMM, large message mode (LMM), and/or PMM. In instances where the NSAM includes an RCS protocol, the fallback procedure can include determining that a destination terminal has RCS capabilities. In various examples, whether the SAM copy or version is sent using LMM, PMM, SMS, or MMS depends on the amount or type of message data associated with the message (e.g., operation 504).

A destination terminal can initiate a download of message data associated with the message received via NSAM, and can send an error message upon failure of the download. Thereafter, the destination terminal can receive a copy of the message via NSAM, initiate a download of message data associated with the copy of the message, and store the message data associated with the copy of the message data. In some examples, the destination terminal can receive a second version of the message, initiate a download of message data associated with the second version of the message, and store the message data associated with the second version of the message. In various examples, the second version of the message can be received via SAM, e.g., LMM or PMM, or via a push notification. In some instances the message data associated with the second version of the message includes or is formatted as RCS PMM, RCS LMM, SMS, or MMS.

In some examples, when the second version of the message is received via a push notification, the destination terminal can fetch the message data associated with the second version of the message from a server via a Representational State Transfer (REST) API call to a Uniform Resource Identifier (URI) associated with the push notification. In some examples, the push notification includes the message data associated with the second version of the message, e.g., when the amount of message data is small, such as text without accompanying image, audio, or video files, and/or no more than 160 characters of text. Other examples of push notifications including message data can be ANDROID notifications holding up to 4KB of data, or IOS notifications holding up to 2KB of data. By contrast, message data including files for download can be linked to by a URI or other reference stored in the push notification, in some examples.

In some examples, the destination terminal can perform a deduplication process. The deduplication process can include determining whether a message ID associated with the copy of the message and a message ID associated with the second version of the message are the same. If the message IDs match, the destination terminal can discard the duplicated downloaded content. In various examples, the downloaded content from either the copy of the message or the second version of the message can be discarded.

In various examples, a server (e.g., at a network node) can receive a message and data associated with the message. The server can store the message and data and can send the message to a terminal associated with a destination user. The server can also listen for the destination terminal to request to download the message data, and/or determine when no request to download the message data was received, e.g., after a timeout. In some examples, the server can send an error message to the terminal associated with the sending user, e.g., in response to determining that no request to download the message data was received.

In various examples, the server can receive or generate a copy of the message and message data, store the copy of the message and message data, and send the copy of the message to the terminal associated with the destination user. In some examples, the server can also be configured to listen for the destination terminal to request to download the copy of the message data and/or to determine when no request to download the copy of the message data was received. The server can receive the request to download the message data associated with the copy of the message and can send the message data associated with the copy of the message to a terminal associated with the destination user. In some examples, the server can send a second version of the message to a terminal associated with the destination user. In some examples, the server can listen for a request to download the message data associated with the second version of the message and/or determine when no request to download the message data associated with the second version of the message was received. The server can send the message data associated with the second version of the message to a terminal associated with the destination user.

In various examples, the server can be configured to send a push notification to the terminal associated with the destination user, such as in response to storing the message data. In some examples, the push notification can include the message data and/or a URI associated with the message data. In examples, the server sends the copy of the message before sending the second version of the message.

In some examples, the server can be configured to determine whether any of the following are the same: a message ID associated with the message, a message ID associated with the copy of the message, or a message ID associated with the second version of the message. In some examples, the server can be configured to listen for a request to delete a message and/or message data from storage and receive a request to delete one or more of the message, the copy of the message, the second version of the message, the first downloaded content, and/or the second downloaded content from storage.

Some examples herein provide improved success when sending and receiving real-time messages, which can improve user experience. Some examples provide functionality for removing duplicate messages and/or associated message data, which can reduce storage load at network nodes and/or terminals, or can reduce network load for the transmission of data.

### ILLUSTRATIVE CONFIGURATIONS

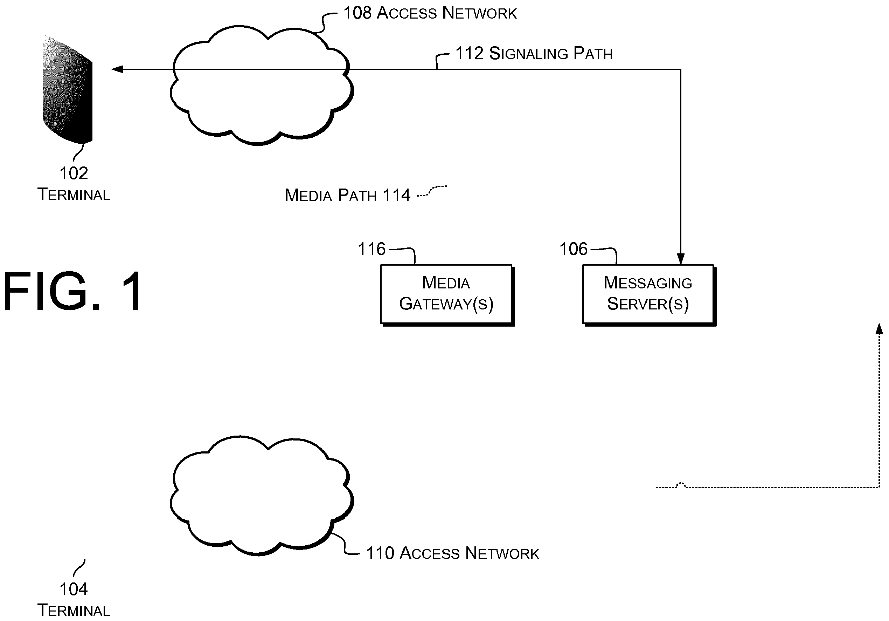

FIG. 1 is a block diagram illustrating a telecommunication system 100 according to some examples. The system includes terminals 102 and 104, e.g., user equipment, smart phones, other mobile phones, tablet computers, hybrid computers, or other computing or communications devices. The terminals 102 and 104 can be associated with respective users who may operate the terminals. The terminals 102 and 104 are communicatively connected to one or more server(s) 106, e.g., via respective access networks 108 and 110. The server(s) 106 can include RCS server(s) such as a CPM (Converged IP Messaging) Message Store Server, a Presence Server, a Messaging Server, or a Multimedia Telephony (MMTEL) Application Server. Additionally or alternatively, the server(s) 106 can include an SMS server, an MMS server, or an interworking function (IWF) that provides terminals 102, 104 with, e.g., IP access to an SS7-based SMS or MMS server. Additionally or alternatively, server(s) 106 can include, e.g., a telephony application server (TAS) of an IMS network. System 100 can include any number of server(s) 106. In some examples, terminals 102 and 104 are both capable of communicating (e.g., configured to selectively communicate) via RCS protocols.

In some examples, server(s) 106 can represent a messaging server, e.g., an RCS server, and a storage server to which sent messages are archived. In some examples, the storage server can include or can be communicatively connected with a push-notification server that sends push notifications when sent messages are archived on the storage server.

In some examples, access networks 108, 110 can include a home network (HPLMN) or a visited network (VPLMN). In some examples, access networks 108, 110 can be or include an Evolved Packet System (EPS) network including Evolved UMTS Terrestrial Radio Access Network (E-UTRAN) access and an Evolved Packet Core (EPC) or another PS access network; a local-area network (LAN)-based access network having a wireless access point (WAP), e.g., a WIFI WAP, and a bridge or other packet relay; or a CS access network having a CS base station and a mobile switching center (MSC) server (MSS).

Once terminal 102 is attached to access network 108, terminal 102 can participate in network sessions. For example, terminal 102 can initiate an NSAM exchange with terminal 104 by exchanging messages via signaling path 112. For example, terminal 102 can transmit a SIP INVITE message having a Session Description Protocol (SDP) body including a session description, or other session-initiation message. In some examples, the session-initiation message is not associated with a handover. Server(s) 106 or terminal 104 can, in response, transmit corresponding SIP response(s), e.g., a SIP 200 OK response.

As used herein, a message "transmitted to" or "transmitted toward" a destination, or similar terms, can be transmitted directly to the destination, or can be transmitted via one or more intermediate network devices to the destination. In the illustrated example, terminal 102 transmits information to terminal 104 via access network 108. Similarly, a message "received from" a destination can be received directly from the destination, or can be received via one or more intermediate network devices, e.g., of access network 108, from the destination. A message passing through one or more intermediate network devices can be modified by those network devices, e.g., by adding or removing framing, or by changing a presentation of at least part of the message, e.g., from a SIP start-line to a SIP header or vice versa.

Session initiation can be performed, e.g., as defined in the VoLTE, RCS, CPM, or SIMPLE standards, and can include the exchange of additional messages (not shown) between the terminals 102 and 104 and the server(s) 106. Data of an NSAM session, such as text of a message, audio data of a voice chat, or video data of a video chat, can be exchanged between terminals 102 and 104 via a media path 114. In some examples, media path 114 can pass through or involve one or more media gateway(s) 116. Signaling path 112 and media path 114 are shown for clarity of explanation. However, in some examples, signaling messages can travel over paths instead of or in addition to signaling path 112, or media messages can travel over paths instead of or in addition to media path 114. For example, terminals 102 and 104 can establish a media path 114 directly between themselves, without a media gateway 116.

In some examples, media content may be carried via signaling path 112 in addition to or instead of via media path 114. For example, textual message content that does not exceed the size limits of a SIP MESSAGE request can be included in that request as a message body (e.g., PMM, SMS-over-IP, or other SAM messages). In some examples, media path 114 may pass through at least one server 106 in addition to or instead of through a media gateway 116. For example, messaging server 106 may serve as both an MSRP proxy and a SIP-based application server.

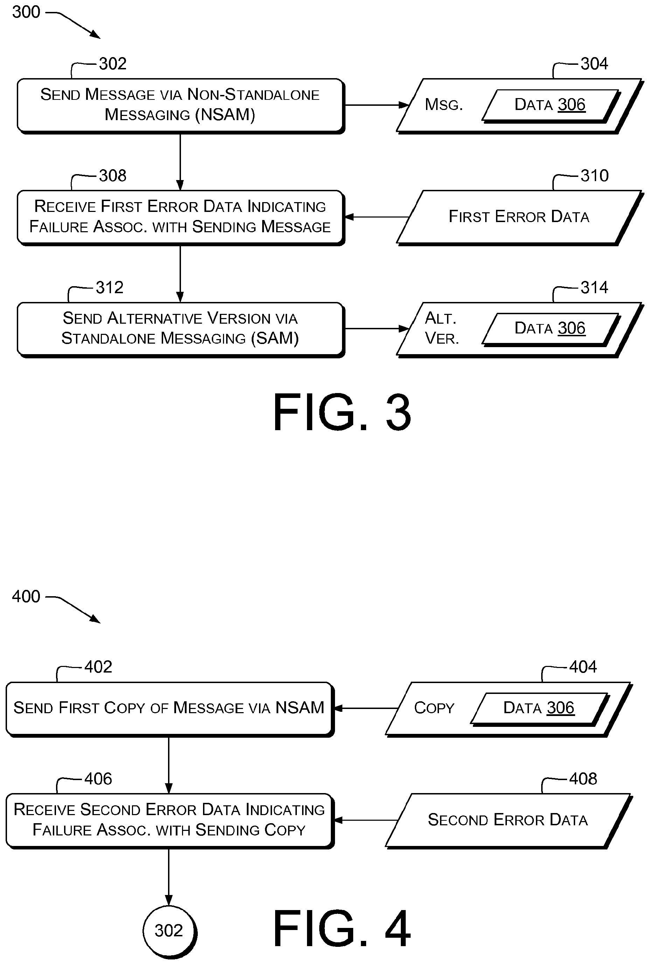

In some examples, different servers 106 can participate in different signaling path(s) 112 or media path(s) 114 with respect to terminal(s) 102, 104. For example, terminal 102 can send an RCS message via signaling path 112 and media path 114 to terminal 104. In, e.g., a fallback situation (e.g., FIGS. 3-5), terminal 102 can additionally or alternatively send push notifications to terminal 104 via one or more additional server(s) 118, e.g., a push-notification server, using signaling path 120 and media path 122.

The terminals 102 and 104 may be implemented as any suitable mobile computing devices configured to communicate over a wireless and/or wireline network, including, without limitation, a mobile phone (e.g., a smart phone), a tablet computer, a laptop computer, a portable digital assistant (PDA), a wearable computer (e.g., electronic/smart glasses, a smart watch, fitness trackers, etc.), a networked digital camera, and/or similar mobile devices. Although this description predominantly describes the terminals 102 and 104 as being "mobile" or "wireless," (e.g., configured to be carried and moved around), it is to be appreciated that the terminals 102 and 104 may represent various types of communication devices that are generally stationary as well, such as televisions, desktop computers, game consoles, set top boxes, and the like. User equipment can include user cellular equipment or other telecommunications or computing devices communicatively connectable with other computing devices via one or more server(s) 106.

The telecommunication system 100 may also include a number of devices or nodes not illustrated in FIG. 1. Such devices or nodes may include an access transfer control function (ATCF), an access transfer gateway (ATGW), a visitor location register (VLR), a serving GPRS support node (SGSN), a gateway GPRS support node (GGSN), a policy control rules function (PCRF) node, or a session border controller (SBC). An IMS may further include a number of devices or nodes not illustrated in FIG. 1, such as a presence server and one or more additional CSCFs. A core network of access network 108, 110 may be a GPRS core network or an EPC network, or may include elements from both types of core networks.

Terminals 102, 104 can provide identification information to the server(s) 106. In some examples, the identification information can includes at least one of: a terminal identifier such as an international mobile equipment identity (IMEI), a network identifier such as a mobile country code (MCC) and a mobile network code (MNC), a user identifier such as an international mobile subscriber identity (IMSI), a user address such as an E.164 international-dialing-plan telephone number, mobile station international subscriber directory number (MSISDN), a network address, such as an Internet IPv4 or IPv6 address, or a country code, e.g., indicating a country in which terminal 102, 104 is located. In some examples, the identification information can include an identifier of a Mobile virtual network operator (MVNO) determined from the IMSI of terminal 102, 104. In some examples, terminal 102, 104 can provide the identification information during a process of attaching to a network, e.g., in an S1AP Initial UE Message. In some examples, terminal 102 can provide the identification information in another message. For example, a SIP REGISTER request or a SIP INVITE request can include a P-Access-Network-Info (PANI) header. The cell global identity (CGI) of the cell (e.g., eNodeB) serving the terminal 102 can be retrieved from the "cgi-3gpp" parameter of the PANI header. The cgi-3gpp parameter can include the MCC, MNC, location area code (LAC), and cell identity (CI).

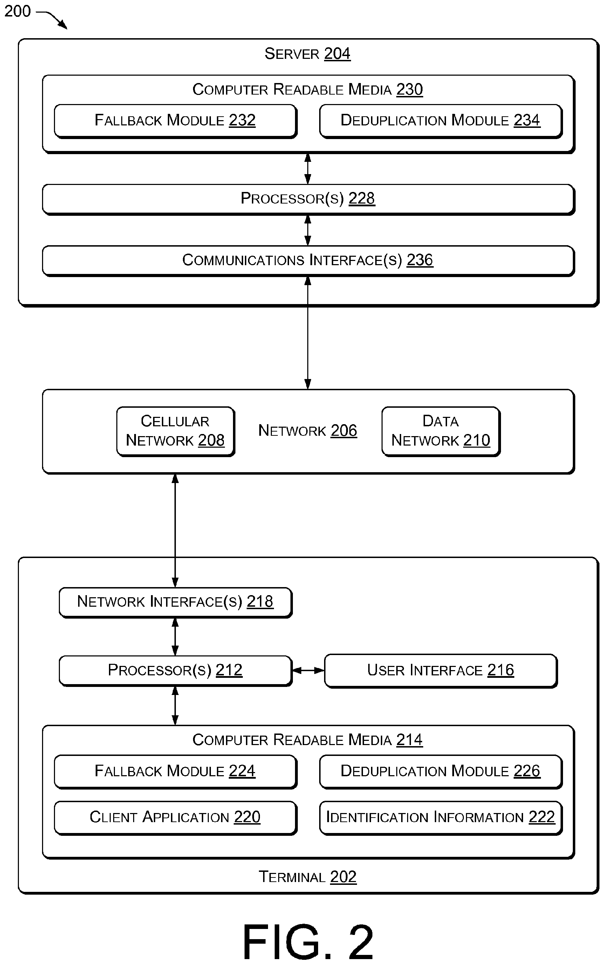

FIG. 2 is a block diagram illustrating a system 200 permitting fallback or deduplication with respect to messages according to some implementations. The system 200 includes a terminal 202, which can represent terminal 102 or 104, FIG. 1, coupled to a server 204, via a network 206. The server 204 can represent server 106. The network 206 can represent, e.g., access networks 108 or 110, or other networks of telecommunication system 100.

The network 206 can include one or more networks, such as a cellular network 208 and a data network 210. The network 206 can include one or more core network(s) connected to terminal(s) via one or more access network(s). Example access networks include LTE, WIFI, GSM Enhanced Data Rates for GSM Evolution (EDGE) Radio Access Network (GERAN), UTRAN, and other cellular access networks. Message transmission, reception, fallback, and deduplication as described herein can be performed, e.g., via 3G, 4G, 5G, WIFI, or other networks.

The cellular network 208 can provide wide-area wireless coverage using a technology such as GSM, Code Division Multiple Access (CDMA), UMTS, LTE, or the like. Example networks include Time Division Multiple Access (TDMA), Evolution-Data Optimized (EVDO), Advanced LTE (LTE+), Generic Access Network (GAN), Unlicensed Mobile Access (UMA), Orthogonal Frequency Division Multiple Access (OFDM), GPRS, EDGE, Advanced Mobile Phone System (AMPS), High Speed Packet Access (HSPA), evolved HSPA (HSPA+), VoIP, VoLTE, IEEE 802.1x protocols, wireless microwave access (WIMAX), WIFI, and/or any future IP-based network technology or evolution of an existing IP-based network technology. Communications between the server 204 and terminals such as the terminal 202 can additionally or alternatively be performed using other technologies, such as wired (Plain Old Telephone Service, POTS, or PSTN lines), optical (e.g., Synchronous Optical NETwork, SONET) technologies, and the like.

The data network 210 can include various types of networks for transmitting and receiving data (e.g., data packets), including networks using technologies such as WIFI, IEEE 802.15.1 ("BLUETOOTH"), Asynchronous Transfer Mode (ATM), WIMAX, and other network technologies, e.g., configured to transport IP packets. In some examples, the server 204 includes or is communicatively connected with an IWF or other device bridging networks, e.g., LTE, 3G, and POTS networks. In some examples, the server 204 can bridge SS7 traffic from the PSTN into the network 206, e.g., permitting PSTN customers to place calls to cellular customers and vice versa.

In some examples, the cellular network 208 and the data network 210 can carry voice or data. For example, the data network 210 can carry voice traffic using VoIP or other technologies as well as data traffic, or the cellular network 208 can carry data packets using HSPA, LTE, or other technologies as well as voice traffic. Some cellular networks 208 carry both data and voice in a PS format. For example, many LTE networks carry voice traffic in data packets according to the VoLTE standard. Various examples herein provide origination and termination of, e.g., carrier-grade voice calls on, e.g., networks 206 using CS transports or mixed VoLTE/3G transports, or on terminals 202 including OEM handsets and non-OEM handsets.

The terminal 202 can be or include a wireless phone, a wired phone, a tablet computer, a laptop computer, a wristwatch, or other type of terminal. The terminal 202 can include one or more processors 212, e.g., one or more processor devices such as microprocessors, microcontrollers, field-programmable gate arrays (FPGAs), application-specific integrated circuits (ASICs), programmable logic devices (PLDs), programmable logic arrays (PLAs), programmable array logic devices (PALs), or digital signal processors (DSPs), and one or more computer readable media (CRM) 214, such as memory (e.g., random access memory (RAM), solid state drives (SSDs), or the like), disk drives (e.g., platter-based hard drives), another type of computer-readable media, or any combination thereof. The CRM or other memory of terminal 202 can hold a datastore, e.g., an SQL or NoSQL database, a graph database, a BLOB, or another collection of data. The terminal 202 can further include a user interface (UI) 216, e.g., including an electronic display device, a speaker, a vibration unit, a touchscreen, or other devices for presenting information to a user and receiving commands from the user. The terminal 202 can further include one or more network interface(s) 218 configured to selectively communicate (wired or wirelessly) via the network 206, e.g., via an access network 108 or 110.

The CRM 214 can be used to store data and to store instructions that are executable by the processors 212 to perform various functions as described herein. The CRM 214 can store various types of instructions and data, such as an operating system, device drivers, etc. The processor-executable instructions can be executed by the processors 212 to perform the various functions described herein.

The CRM 214 can be or include computer-readable storage media. Computer-readable storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information and which can be accessed by the processors 212. Tangible computer-readable media can include volatile and nonvolatile, removable and non-removable media implemented in any method or technology for storage of information, such as computer readable instructions, data structures, program modules, or other data.

The CRM 214 can include processor-executable instructions of a client application 220. The client application 220, e.g., a native or other dialer, can permit a user to originate and terminate communication sessions associated with the terminal 202, e.g., a wireless phone. The client application 220 can additionally or alternatively include an SMS, RCS, or presence client, or a client of another telephony service offered by the server 204.

The CRM 214 can store information 222 identifying the terminal 202. The information 222 can include, e.g., an IMEI, an IMSI identifying the subscriber using terminal 202, or other information discussed above. The CRM 214 can additionally or alternatively store credentials (omitted for brevity) used for access, e.g., to IMS or RCS services.

The CRM 214 can include processor-executable instructions of a fallback module 224 or a deduplication module 226. Modules 224, 226 can be implemented as standalone apps or portions thereof; as components of an operating system (OS) running on terminal 202; or as portions of client application 220. Modules 224, 226 can be executed by the one or more processors 212 to perform functions described herein with reference to FIGS. 3-9.

The server 204 can include one or more processors 228 and one or more CRM 230. The CRM 230 can be used to store processor-executable instructions of a fallback module 232 or a deduplication module 234. The processor-executable instructions can be executed by the one or more processors 228 to perform various functions described herein, e.g., with reference to FIGS. 3-9. In some examples, functions described with reference to fallback module 224 or deduplication module 226 can be performed by fallback module 232 or deduplication module 234, respectively, e.g., on behalf of a sending or destination terminal. For example, terminal 202 can transmit a message to a message-relay server 204. Fallback module 232 running at message-relay server 204 can then forward the message to a destination terminal 104, and send copies or alternative versions (as discussed below) in the event of transmission failure. Similarly, a message-relay server 204 connected with destination terminal 104 can receive multiple copies or versions of a message. Deduplication module 234 running at message-relay server 204 can forward only one copy or version to destination terminal 104, in various examples.

In some examples, server 204 can communicate with (e.g., is communicatively connectable with) terminal 202 or other devices via one or more communications interface(s) 236, e.g., network transceivers for wired or wireless networks, or memory interfaces. Example communications interface(s) 236 can include ETHERNET or FIBRE CHANNEL transceivers, WIFI radios, or DDR memory-bus controllers (e.g., for DMA transfers to a network card installed in a physical server 204).

In some examples, processor 212 and, if required, CRM 214, are referred to for brevity herein as a "control unit." For example, a control unit can include a CPU or DSP and instructions executable by that CPU or DSP to cause that CPU or DSP to perform functions described herein. Additionally or alternatively, a control unit can include an ASIC, FPGA, or other logic device(s) wired (physically or via blown fuses or logic-cell configuration data) to perform functions described herein. Other examples of control units can include processor 228 and, if required, CRM 230.

### ILLUSTRATIVE OPERATIONS

FIG. 3 is a dataflow diagram illustrating an example process 300 for improving transmission reliability using fallback, and related data items. Process 300 can be performed, e.g., by a control unit of a terminal 202 (or 102, 104) of a telecommunication system 100, e.g., a terminal 202 that is sending a message. For brevity, without limitation, terminal 102 will be used throughout as an example of a sending terminal, and terminal 104 will be used throughout as an example of a destination terminal.

In some examples, the terminal 202 includes one or more processors (e.g., processor 212) configured to perform operations described below, e.g., in response to computer program instructions of the fallback module 224. In some examples, process 300 begins with operation 302. In other examples, process 300 begins with operation 402, and the first copy 404 of the message is the original message 304.

Operations shown in FIG. 3 and in FIGS. 4-9, discussed below, can be performed in any order except when otherwise specified, or when data from an earlier step is used in a later step. For clarity of explanation, reference is herein made to various components shown in FIGS. 1-2 that can carry out or participate in the steps of the example method. It should be noted, however, that other components can be used; that is, example method(s) shown in FIGS. 3-9 are not limited to being carried out by the identified components, and are not limited to including the identified operations or messages.

At 302, the control unit can send a message 304 comprising message data 306 via NSAM (e.g., RCS SMM). For example, a text message 304 can be sent via RCS chat, or a file message 304 can be sent via RCS file transfer within an established NSAM session. Message 304 can include, e.g., a Common Profile for Instant Messaging (CPIM), (X)HTML (HyperText Markup Language, in the HTML or Extensible Markup Language, XML, serializations), or plain-text message transmitted via an MSRP SEND request. Message 304 can be addressed from a first user (or group of users) and addressed to a second user (or group of users, or proxy for a group, e.g., a conference focus). The addressing can be indicated using headers in message 304, e.g., SIP From and To headers. Additionally or alternatively, the addressing can be indicated during the message transmission process, e.g., via commands such as the SMTP MAIL FROM or RCPT TO commands.

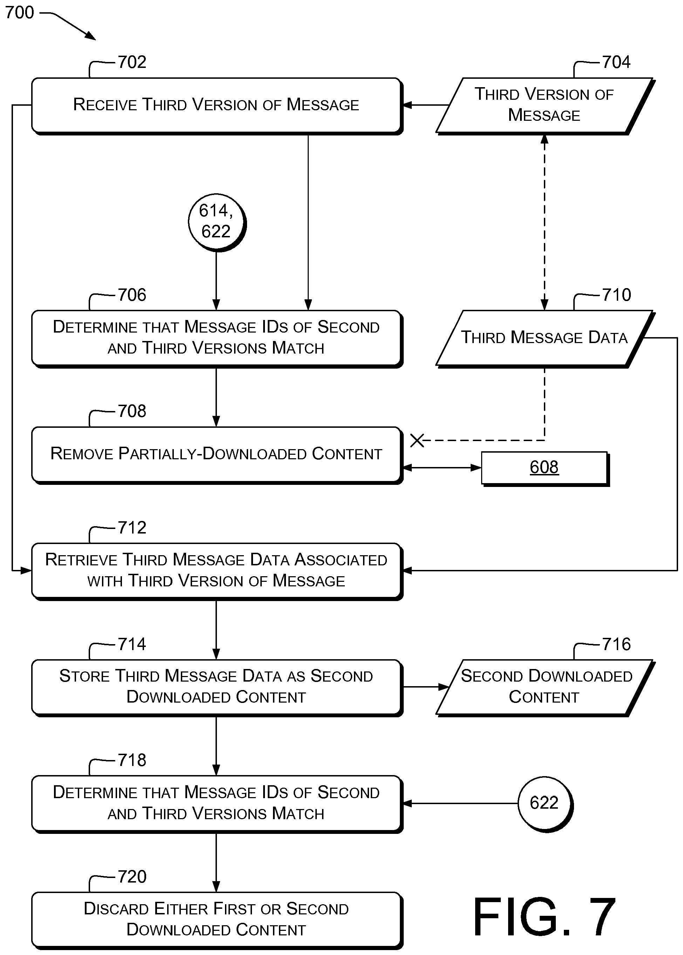

In some examples, sending terminal 102, or a messaging server 106 that receives message 304 from terminal 102, can archive message 304 into a storage server. In some examples, sending terminal 102, or the storage server, can trigger a push notification to a destination user or destination terminal 104 of the archiving operation or the archived copy of message 304. Examples of deduplication of message 304 and the archived copy of message 304 are described herein with reference to FIGS. 7-9.

At 308, the control unit can receive first error data 310 indicating a failure associated with sending the message. The first error data 310 can include, e.g., an error code from SIP or another protocol. Additionally or alternatively, the first error data 310 can include an indication from a network subsystem of terminal 202 that no response was received within a predetermined timeout, or a signal or other data from an OS of terminal 202 indicating that a timer has expired (that signal or other data being provided before a response is received). In some examples, an error can indicate a timeout, an unreachable network, early termination of a network or NSAM session, a SIP error, an MSRP error, or another types of error.

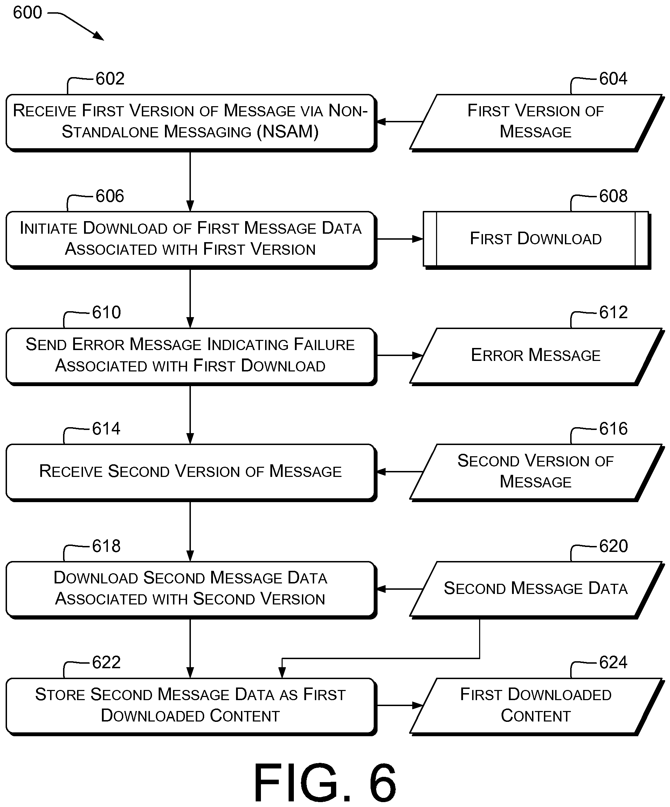

At 312, e.g., in response to receiving the first error data 310, the control unit can send an alternative version 314 of the message 304 via SAM (e.g., PMM or LMM, such as RCS PMM or RCS LMM). The alternative version 314 of the message 304 can include the message data 306, just as the message 304 does. In some examples, the message 304, the first copy 404 of the message, and the alternative version 314 of the message, or any two of those, share a common message identifier ("Message-ID"). This can permit deduplicating messages, copies, or alternative versions. Examples are discussed herein, e.g., with reference to FIGS. 6-9. In some examples, operations 308 and 312 can be performed multiple times, e.g., to retry via RCS SAM and then via SMS or MMS, if the RCS SAM fails.

In some examples, operation 308 is omitted. Message 304 and alternative version 314 are sent in either order, or in parallel. For example, message 304 can be sent via RCS or other NSAM, and alternative version 314 can be sent via a push-notification system. Example push-notification systems include APPLE Push Notification Service (APNS), GOOGLE Cloud Messaging (GCM), or FIREBASE Cloud Messaging (FCM). For example, at operation 312, the control unit can transmit the alternative version 314 to a push-notification system, e.g., via HyperText Transfer Protocol (HTTP) (which can include unencrypted http, SSL/TLS-secured https, or future protocols used to provide a secure HTTP link) or XMPP. The push-notification system (e.g., server 106 or 118) can then forward the message as a push notification to the destination terminal, as described herein. Sending message 304 and alternative version 314 without waiting (operation 308) for an error can increase the probability that the destination terminal will receive the message data 306. Accordingly, in some examples, operation 312 is performed after operation 302; operation 312 is performed before operation 308; or operations 302 and 312 are performed at least partly concurrently.

In some examples, e.g., useful with techniques described herein with reference to FIGS. 6-9, a messaging server 106, 118 that receives message 304 or alternative version 314 sends, or causes to be sent, a push notification of the message 304 or alternative version 314 or of the fact that the message 304 or alternative version 314 has been sent. For example, an RCS messaging application server (AS) can include, be part of, or be integrated or communicatively connectable with, a push-notification system. Upon receipt of the message 304 or alternative version 314 from a source terminal 102, the messaging server 106, 118 can send the push notification to destination terminal 104, or send a message to the push-notification system to cause the push notification to be sent to destination terminal 104.

In some examples, e.g., useful with techniques described herein with reference to FIGS. 6-9, a messaging server 106, 118 that receives message 304 sends, or causes to be sent, alternative version 314. For example, messaging server 106, 118 can perform fallback from RCS SAM to MMS or SMS. Accordingly, in some examples, any of operations 308, 312, 406, 302, 502, 504, 506, 908, 910, 916, or 918 can be performed at a messaging server 106, 118 instead of or in addition to at a terminal 102, 104.

In the examples described herein, including examples described with reference to FIGS. 1-9, unless otherwise specified, individual items, e.g., physical items or data items, can be provided or operated on by any combination of the described operations. Similarly, any operation described herein can produce data not consumed by a subsequent operation.

FIG. 4 is a dataflow diagram illustrating an example process 400 for sending messages, and related data items. Process 400 can be performed by a control unit of a terminal 202, e.g., a message-sending terminal. In some examples, operation 406 can precede operation 302.

At 402, the control unit can send a first copy 404 of the message 304 via NSAM. The first copy 404 can include the message data 306. As used herein, the term "copy" does not require exact identity. For example, a CPIM message includes a "DateTime" header field. In some examples, the first copy 404 has the same DateTime value as message 304; in other examples, the first copy 404 has an updated DateTime value compared to message 304 (e.g., a later DateTime value). In another example, a large message may be split into multiple MSRP chunks, e.g., as indicated by MSRP Byte-Range headers. In some examples, the first copy 404 is divided into chunks at the same points as message 304; in other examples, the first copy 404 is divided into chunks at different points than is message 304. In still other examples, lower-layer protocol values may change between message 304 and first copy 404. For example, the TCP sequence numbers of the TCP segments used to transmit first copy 404 may be different from the TCP sequence numbers used to transmit message 304. The above examples are given of situations in which the first copy 404, as transmitted over the network, is not bit-for-bit identical with the message 304, as transmitted over the network.

Similarly, as used herein, references to, e.g., particular message data (e.g., message data 306) being included in different messages, copies, or versions does not require exact identity. For example, textual message data 306 may be sent in message 304 with CR LF line ends, but sent in alternative version 314 with LF-only line ends. Similarly, different messages, copies, or versions may encode message data 306 with different content transfer encodings (e.g., base64, uuencode, or unencoded 8-bit) or different character encodings (e.g., UTF-8 or ISO-8859-1).

At 406, the control unit can receive second error data 408 indicating a failure associated with sending the first copy 404 of the message 304. Examples are discussed herein, e.g., with reference to first error data 310. In some examples, the second error data 408 indicate that a response to the first copy 404 has not been received within a predetermined time. In some examples, operation 406 can be followed by operation 302, so the sending of the message 304 can be performed in response to receiving the second error data 408.

In some examples, operations 402 and 406 can be performed any number ≥1 of times, e.g., twice for an example that sends four messages (at #402, #402, #302, #312) before notifying the user (operation 510).

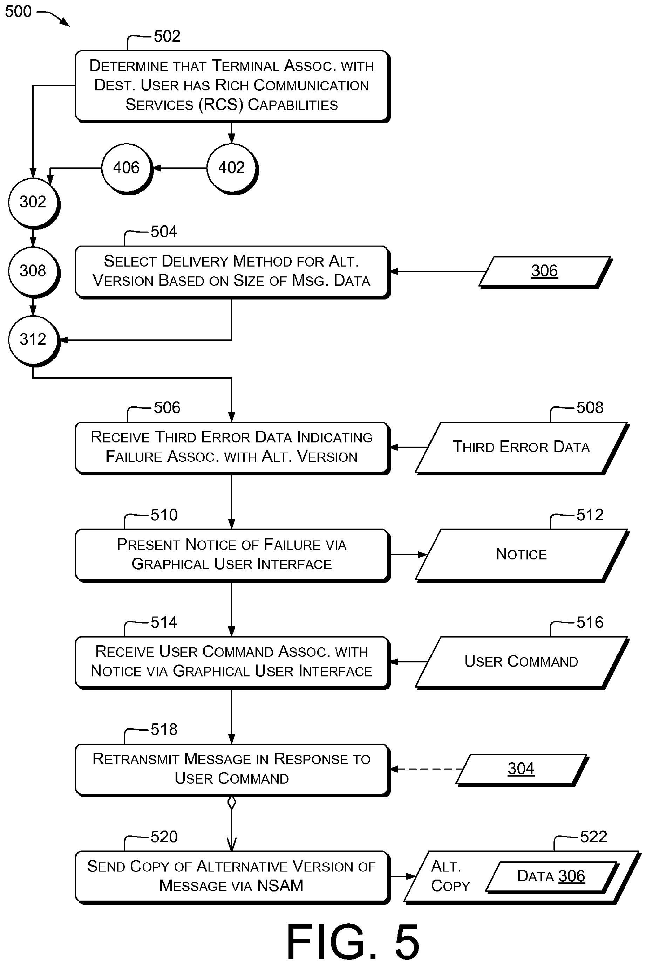

FIG. 5 is a dataflow diagram illustrating an example process 500 for transmitting messages with fallback, and related data items. Process 500 can be performed by a control unit of a terminal 202, e.g., a message-sending terminal. In some examples, operation 502 can be followed by operation 302. In some examples, operation 504 can be followed by operation 312. In some examples, operation 312 can be followed by operation 506.

At 502, the control unit can determine that a network terminal (e.g., a destination terminal) associated with a user receiving the first message (a destination user) has RCS capabilities (e.g., implements GSMA RCC.07, RCC.11, or RCC.61). Operation 502 can be followed by operation 302, at which the message 304 can be sent via NSAM (e.g., CPM SMM or SIMPLE SMM over RCS), e.g., in response to the determination at operation 502 that the destination terminal supports RCS. Operation 502 can additionally or alternatively be followed by operation 402, at which the first copy 404 of the message 304 can be sent via NSAM (e.g., CPM SMM or SIMPLE SMM over RCS), e.g., in response to the determination at operation 502 that the destination terminal supports RCS. In some examples, in response to determining that the destination terminal supports RCS (operation 502), NSAM and SAM operations described with reference to FIGS. 3 and 4, or other messages described herein as transmitted to the destination terminal, can be performed using RCS messaging.

In some examples, at operation 504, the control unit can transmit a SIP OPTIONS request to the destination terminal. The control unit can then receive a SIP response indicating capabilities of the destination terminal. Additionally or alternatively, the control unit can transmit a SIP SUBSCRIBE request to a presence server (e.g., in an IMS network), and subsequently receive a corresponding SIP NOTIFY request from the presence server. The SIP NOTIFY request can include data indicating the capabilities of the destination terminal. The SUBSCRIBE request can have an Expires header value of zero for one-time retrieval of capability information ("anonymous fetch"). Additionally or alternatively, presence information can be retrieved via an XML Configuration Access Protocol (XCAP) GET for the presence content from an XML Data Management Server (XDMS) service.

In some examples, the capabilities can be indicated by feature tags in a SIP Accept-Contact or Contact header or other header, e.g., under the "3gpp-service" or "g.oma" feature-tag trees. The control unit can select a delivery method for which the corresponding tag is included in the capability information, or select a fallback method if predetermined tag(s) are not present. For example, the control unit can select CPM Standalone (SAM) Pager Mode (PMM) if the tag "3gpp-service.ims.icsi.oma.cpm.msg" is present, or else SIMPLE IM Pager Mode (PMM) if the tag "+g.oma.sip-im" is present, or else MMS if the message is too large for SMS, or else SMS. In some examples, the delivery mode is an RCS SAM delivery mode, e.g., not SMS and not MMS.

At 504, the control unit can select a delivery method for the alternative version 314 based at least in part on the size of the message data. The delivery method can be at least one of an LMM delivery method, a PMM delivery method, an SMS delivery method, or an MMS delivery method. Operation 504 can be followed by operation 312. At operation 312, the alternative version 314 can be sent using the selected delivery method.

At 506, the control unit can receive third error data 508 indicating a failure associated with sending the alternative version 314 of the message 304. Examples are discussed herein, e.g., with reference to first error data 310.

At 510, the control unit can present, via a user interface (e.g., user interface 216), a notice 512 of the failure associated with sending the alternative version 314 of the message 304. For example, the UI can be a graphical user interface (GUI), and the notice 512 can include a top-bar notification, tray icon, or toast. Additionally or alternatively, the notice 512 can include a dialog with a "Resend?" prompt and buttons or other UI controls to receive a "yes" or "no" responses from the user. In some examples, a "Back" button is the, or is an additional, "no" control. Additionally or alternatively, the control unit can present the notice 512 via an audio, tactile (e.g., Braille), or other user interface 216. In some examples, operation 510 can be performed after an RCS SAM (operation 312) failure, or after an SMS/MMS or other SAM failure (also operation 312).

At 514, the control unit can receive, via the user interface (e.g., UI 216), a user command 516 associated with the notice 512. For example, the user can click or tap "yes" in a dialog box, in response to which the clicked/tapped UI control can provide data indicating the "yes" response as the user command 516. Additionally or alternatively, the user an speak or otherwise produce a sound (e.g., knocking three times if the user wants "yes"), and the control unit can process the sound, e.g., through a speech-recognition engine, a transient detector, one or more filters, or other processing units or steps to determine the user command 516.

At 518, the control unit can retransmit the message 304 in response to the user command 516, e.g., in response to a "yes" command. Retransmission can include sending a copy of message 304 or of a version thereof (depicted graphically using a dashed line). Examples are discussed herein, e.g., with reference to operations 302 or 402. In some examples, operation 518 includes operation 520.

At 520, the control unit can send a copy 522 of the alternative version 314 of the message 304 via NSAM. Copy 522 can include the message data 306. Examples are discussed herein, e.g., with reference to operation 312. This can permit transmitting messages without loss of fidelity in the presence of transient network failures that interfere with the delivery of message 304 but not with the delivery of copy 522.

In some examples, fallback as shown in FIGS. 3-5 can be performed as in any of the following examples. Arrows separate fallback steps, processing is performed left to right in each chain of arrows, and parentheticals give nonlimiting examples. If terminal 104 is RCS capable and the message includes media, as opposed to file transfer: RCS Chat (message 304) → RCS standalone message or other pager-mode message (alternative version 314) → Manual retry (operations 514, 518). If terminal 104 is RCS capable, and the message includes a file to transfer: RCS File transfer (message 304, message data 306) → RCS standalone message (e.g., large-message mode) (alternative version 314) → Manual retry (operations 514, 518). If terminal 104 is not RCS capable, and the message includes media: RCS standalone message or other pager-mode message (message 304) → Manual retry (operations 514, 518). If terminal 104 is not RCS capable, and the message includes a file to transfer: RCS standalone message (e.g., large-message mode) (message 304; message data 306) → Manual retry (operations 514, 518). Accordingly, in some examples, operations 302 and 308 are omitted.

Some examples provide increased robustness against transient network failures or network failures that affect one type of RCS messaging but not another. Any of the examples listed in this paragraph can be preceded by determining that the destination terminal is RCS capable (operation 502). Example fallback scenarios follow, using the notation of the preceding paragraph. Sending RCS SMM (operation 302) → fallback to RCS LMM (operation 312). Sending RCS SMM (operation 302) → fallback to RCS LMM (operation 312) → fallback to MMS. Sending RCS SMM (operation 302) → fallback to RCS PMM (operation 312). Sending RCS SMM (operation 302) → fallback to RCS PMM (operation 312) → fallback to SMS.

FIG. 6 is a dataflow diagram illustrating an example process 600 for improving transmission reliability using fallback, and related data items. Process 600 can be performed, e.g., by a control unit of a terminal 202 (or 102, 104) of a telecommunication system 100, e.g., a destination terminal or other terminal 202 that is receiving a message. In some examples, the terminal includes one or more processors (e.g., processor 212) configured to perform operations described below, e.g., in response to computer program instructions of the fallback module 224 or the deduplication module 226.

In some examples, process 600 begins with operation 602. In other examples, process 600 begins with operation 614, and the second version 616 of the message is the earliest-received version of the message. Accordingly, the terms "first" and "second" are used for clarity, and do not limit the sequence of steps except as expressly shown and discussed herein.

Example fallback and deduplication operations described herein with reference to FIGS. 6-9 are discussed with respect to particular numbers of copies or versions of a message for clarity of explanation. However, these operations can be used with respect to more copies or versions than shown. For example, in FIG. 6, operations 606-614 can be performed a loop to attempt to download message data associated with more than two versions of a message.

At 602, the control unit can receive a first version 604 of a message via NSAM. In some examples, the NSAM comprises an RCS protocol, e.g., CPM SMM or SIMPLE SMM. First version 604 can represent message 304 transmitted at operation 302.

At 606, the control unit can initiate a first download 608 of first message data associated with the first version 604. The first message data can include, e.g., an image; an audio recording; a video recording; a document file; or another file. In some examples, the control unit can extract an IMAP, HTTP, or other resource identifier (e.g., a Unique Resource Identifier, URI) from the first version 604. The control unit can then connect to a server (e.g., messaging server 106) identified by the URI and request the first message data (e.g., via an HTTP(s) GET request to a REST API). In some examples, the first version 604 can include an application/vnd.gsma.rcs-fthttp+xml part including an XML attribute matching the XPath expression "/file/file-info[@type='file']/data/@url" (GSMA RCC.07) or other expression locating a URL in an attribute or element. The value of that attribute can be the URI at which the file should be retrieved. In other examples, other XML structures or formats (e.g., JSON or YAML) can be used.

In some examples, after operation 606, the first download 608 may fail, e.g., due to network overload, to movement by the destination terminal 104 out of the coverage area of access network 110, the user's setting the receiving terminal 202 to airplane mode or otherwise disabling network connectivity at the terminal 202, or other transient network or terminal conditions. In some examples, the control unit may determine that the first download 608 has failed upon receipt of an error code such as an HTTP 4xx response to an HTTP request initiating the first download 608. Additionally or alternatively, the server from which first download 608 is being performed may fail to respond with in a predetermined length of time, whereupon the control unit may determine that the first download 608 has failed. Examples of errors are described herein with reference to first error data 310.

In some examples, when the first download 608 fails at operation 606, the control unit can remove any portion of first download 608 that may have already been received. In some examples, this can be done in response to a determination, at operation 706, that a third version 704 of the message is available for download. This is discussed below with reference to FIG. 7.

At 610, the control unit can send an error message 612, e.g., to the sending terminal 102, indicating a failure associated with the first download 608. Error message 612 can represent or include first error data 310 described herein with reference to operation 308.

At 614, the control unit can receive a second version 616 of the message, e.g., via SMM or other forms of NSAM, PMM or other forms of SAM, or a push notification. For example, the second version can include an RCS pager-mode message, an SMS message, or an MMS message. In the illustrated example, the second version 616 is received before the third version 704, discussed below with reference to operation 702. In other examples, the third version 704 is received before the second version 616. Second version 616 can represent alternative version 314 (operation 312) or copy 404 (operation 402). In some examples, the first version 604 can be received via NSAM using a first RCS protocol (e.g., CPM SMM), and the second version 616 can be received via SAM using a second RCS protocol (e.g., CPM LMM or PMM). In some examples, the first version 604 and the second version 616 can differ in metadata, e.g., time of archival or server location of archival (e.g., RCS vs. push notification). Different metadata or access indications (e.g., URLs) may permit a second download (operation 618) to succeed even though the first download 608 failed.

At 618, the control unit can download second message data 620 associated with the second version 616. In the illustrated example, operation 618 includes initiating the download and successfully completing the download. Operation 618 can include downloading via any protocol or using any technique described herein with reference to operation 606, e.g., via a Representational State Transfer (REST) API at an endpoint Uniform Resource Identifier (URI) associated with a push-notification second version 616, or by extracting the second message data 620 from the second version 616.

At 622, the control unit can store the second message data 620 as first downloaded content 624. For example, the control unit can store the second message data 620 in a volatile or nonvolatile memory of terminal 104, e.g., CRM 214. In some examples, partial content of first download 608 can be removed, e.g., in response to a determination described herein with reference to operations 706 or 718, but with reference to message IDs of the first version 604 and the second version 616.

FIG. 7 is a dataflow diagram illustrating an example process 700 for receiving or deduplicating messages, and related data items. Process 700 can be performed by a control unit of a terminal 202, e.g., a destination (e.g., message-receiving) terminal 104. For example, process 700 can be performed by processor 212 in response to instructions of the deduplication module 226. In some examples, operation 614 can be followed by operation 706. In some examples, operation 622 can be followed by operation 706 or operation 718. In some examples, operations 702, 712, or 714 can be performed in any relative order with respect to any of operations 602-622, e.g., before or after operation 622.

At 702, the control unit can receive a third version 704. For example, the third version 704 of the message can be received via one of: PMM or other SAM, or a push notification. In some examples in which the second version 616 is received via PMM or other SAM, the third version 704 can include one of: an SMS message, or an MMS message. In some examples in which the third version 704 is received via PMM, the third version 704 can include a message sent via, e.g., APNS, GCM, or FCM (or another push-notification system). Operation 702 can be followed by operation 706, operation 712, or both (in either relative order).

Third version 704 can represent alternative version 314 (operation 312). For example, if terminal 104 does not reply to message 304 (or, likewise, first copy 404) before terminal 102 times out (e.g., described herein with reference to operations 308, 406), terminal 102 may proceed to send alternative version 314 while operation 618 is still in progress. Therefore, terminal 104 may receive both second version 616 and third version 704. In some examples, destination terminal 104 does not report this as an error condition, but instead deduplicates second version 616 and third version 704.

In some examples in which alternative version 314 is sent via a push notification service, the push notification service may archive messages to provide guaranteed delivery. Therefore, depending on the relative network load and timing, one of second version 616 or third version 704 may arrive first, and the other second. In some examples, destination terminal 104 does not report this as an error condition, but instead deduplicates second version 616 and third version 704.

At 706, the control unit can determine that a message ID that is associated with the second version 616 of the message matches a message ID that is associated with the third version 704 of the message. In response, the control unit can perform operation 708. Operation 706 can include comparing message IDs for binary equality, or for case-sensitive or case-insensitive equality of hex or other textual representations, for example. Message IDs can be represented in, e.g., SIP or CPIM headers. Operation 706 can be performed after both operation 622 and operation 702, in some examples.

At 708, the control unit can remove a portion of first download 608 that was received at the terminal 104 prior to the download failure from a memory of terminal 104, e.g., CRM 214. This can save space that would otherwise be used by a failed download, and remove the use of space by a separate download of third message data 710 associated with the third version 704 (graphically represented by the dashed line terminating in an "X"). In some examples, the third message data 710 is included in or associated with (e.g., identified by a URI contained in) third version 704.

At least some of these examples can be used with the third version 704 received via a push notification. For example, the second version 616 can be received via SMM and the third version 704 can be received via a push notification. Additionally or alternatively, the second version 616 can be received via a push notification and the third version 704 can be received via SMM or PMM.

In some examples, push notifications may be handled by one app or OS component running on terminal 104, and RCS messages by a different app or OS component. Therefore, two copies of the data may be downloaded, e.g., one by an app and one by an OS component. Additionally or alternatively, two copies may be downloaded by respective, different apps, e.g., one for push notifications and another for RCS messages. In some of these examples, therefore, operation 618 downloads message data, and operation 712 also retrieves message data.

In some examples, at 712, the control unit can retrieve the third message data 710 associated with the third version 704. For example, the control unit can fetch the third message data 710 from a server (e.g., messaging server 106) via a REST API at an endpoint URI associated with a push notification or other third version 704. Additionally or alternatively, the control unit can download the third message data 710 from a download URL, server, mailbox, or other location indicated in the third version 704. Examples are discussed herein, e.g., with reference to operations 606 and 618. Additionally or alternatively, the third version 704 (e.g., a push notification) can include the third message data 710 associated with the third version 704. Operation 712 can include extracting the third message data 710 from the third version 704. For example, the third message data 710 can be included in a header or body of the third version 704, or a portion thereof, and can be extracted by selecting the appropriate portion using pattern-matching, regular expressions, or other techniques.

At 714, the control unit can store the third message data 710 as second downloaded content 716. Examples are discussed herein, e.g., with reference to operation 622.

At 718, the control unit can determine that a message ID that is associated with the second version 616 of the message matches a message ID that is associated with the third version 704 of the message. Examples are discussed herein, e.g., with reference to operation 706.

At 720, the control unit can discard at least one of (e.g., either of), the first downloaded content 624 or the second downloaded content 716. This can be done in response to the determination at operation 718. For example, the control unit can delete the first downloaded content 624 or the second downloaded content 716 from RAM, Flash, or another CRM 214. Additionally or alternatively, the control unit can mark space occupied by the first downloaded content 624 or the second downloaded content 716 as available to be overwritten by later data. This can reduce the amount of storage space required, compared to schemes that retain duplicates. In some examples, the discarded content is a partial download that was interrupted by a download failure.

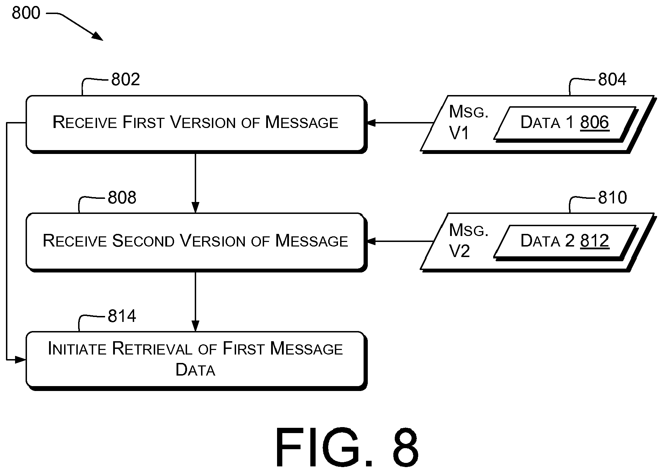

FIG. 8 is a dataflow diagram illustrating an example process 800 for receiving messages, and related data items. Process 800 can be performed, e.g., by a control unit of a terminal 104 of a telecommunication system 100, e.g., terminal 202. In some examples, the terminal 202 includes one or more processors (e.g., processor 212) configured to perform operations described below, e.g., in response to computer program instructions of the deduplication module 226.

At 802, the control unit can receive a first version 804 of a message, e.g., a CPIM message sent via RCS SMM or PMM, or another NSAM or SAM protocol. The first version 804 of the message can include (as shown) or otherwise be associated with first message data 806. Examples are discussed herein, e.g., with reference to operations 602, 614, or 702. Operation 802 can be followed by operation 808 or operation 814. For example, operation 814 can begin before operation 808 begins or is complete.

At 808, the control unit can, e.g., subsequent to operation 802, receive a second version 810 of the message, e.g., via NSAM, SAM (e.g., a CPIM message sent via PMM, or an SMS or MMS), or push notification (e.g., APNS/GCM/FCM). The second version 810 of the message can include (as shown) or otherwise be associated with second message data 812. Examples are discussed herein, e.g., with reference to operations 602, 614, or 702. In some examples, the second version 810 is a copy of the first version 804 sent via a different transport, e.g., as discussed herein with reference to operation 402, or is an alternative version 314, e.g., as discussed herein with reference to operation 312. Operation 808 can be followed by operation 814.

At 814, the control unit can, e.g., subsequent to operation 802, initiate retrieval of the first message data 806. The control unit can additionally complete the retrieval as part of, or subsequent to, operation 814. Examples are discussed herein, e.g., with reference to operations 606 or 712. In some examples, the control unit does not retrieve, or initiate retrieval of, the second message data 812. This can reduce bandwidth compared to downloading duplicate messages twice. For example, if the first message data 806 are successfully retrieved via SIP/MSRP, retrieval of the second message data 812 (e.g., using IMAP or HTTP) can be discontinued or skipped since the first message data 806 is already present. Similarly, if the first message data 806 are successfully retrieved via IMAP or HTTP, retrieval of the second message data 812 via SIP/MSRP can be discontinued or skipped.

In some examples, operation 814 can include retrieving the first message data 806 by fetching the first message data 806 from a message server indicated in the first version 804 of the message. The message server can be, e.g., an IMAP or HTTP(S) server, or other server(s) 106. Examples are discussed herein, e.g., with reference to operations 606 or 712.

Some example messaging systems attempt to transmit messages both via RCS and a push notification. Some example push-notification systems (e.g., apps or servers) archive messages to provide reliable delivery. Therefore, terminal 104 may receive the same message both via RCS (operation 802 or 808) and via a push notification (operation 808 or 802, respectively). Therefore, a messaging server 106, an app implementing deduplication module 226, or another network or terminal component can deduplicate the received copies to reduce bandwidth and storage requirements.

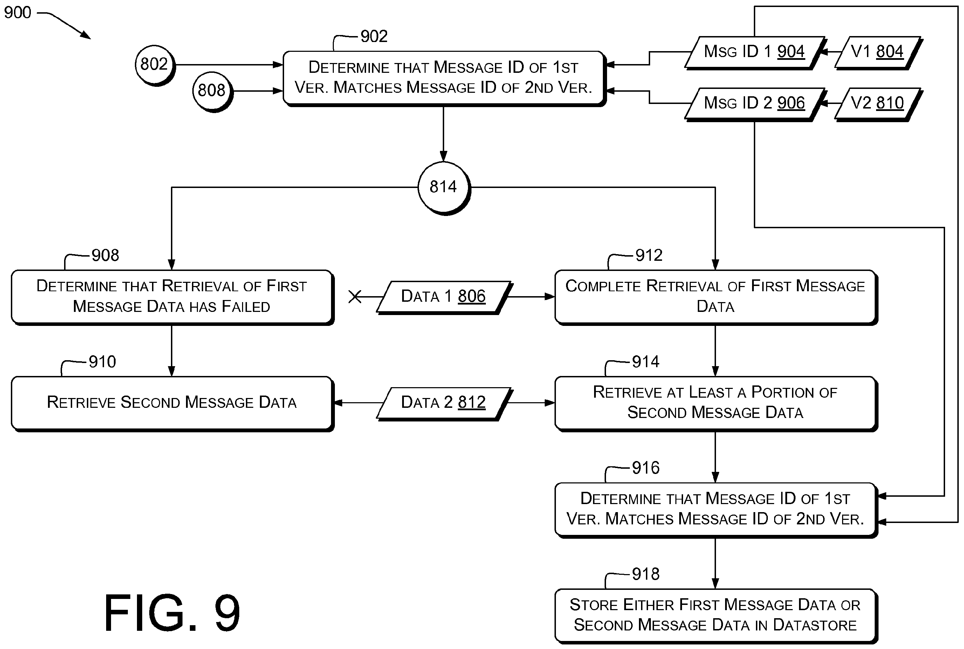

FIG. 9 is a dataflow diagram illustrating an example process 900 for receiving messages with fallback, and related data items. Process 900 can be performed by a control unit of a terminal 202, e.g., a destination (e.g., message-receiving) terminal. Process 900 can be performed in response to instructions of the fallback module 224 or the deduplication module 226. Operation 902 can follow both operation 802 and operation 808. Operation 814 can be followed by operation 908 or operation 912.

At 902, the control unit can determine that a first message ID 904 that is associated with the first version 804 of the message matches a second message ID 906 that is associated with the second version 810 of the message. Examples are discussed herein, e.g., with reference to operation 706. Operation 902 can be followed by operation 814. This can permit retrieving the first message data 806 (e.g., and not the second message data 812) when duplicate messages are received, without losing message data of non-duplicate messages.

At 908, the control unit can determine that the retrieval of the first message data has failed. For example, the control unit can receive error data or detect a timeout. Examples are discussed herein, e.g., with reference to operations 308, 406, 506, 610 or error data/messages 310, 408, 508, 612. For example, if a SIP/MSRP download is unsuccessful, terminal 104 can discontinue that download, discard any downloaded data, and retrieve the second message data 812 via a push notification system or a sync system.

At 910, the control unit can retrieve the second message data 812. Operation 910 can be performed, e.g., in response to the determination at operation 908. Examples are discussed herein, e.g., with reference to operations 614 or 702. Various examples of operation 910, e.g., used at the destination terminal 104 or a messaging proxy server, use the fact that the message arrives via two paths (e.g., one real-time using SIP/MSRP protocols from a messaging server and another using a push/sync when a storage server receives the message from the messaging server for archiving) to improve the reliability of message transmission and receipt.

At 912, the control unit can complete retrieval of the first message data. For example, the control unit can receive all the bytes of the first message data 806, a "BYE" command from a download server, a success code, or another indication of successful transfer. Examples are discussed herein, e.g., with reference to operation 618.

At 914, the control unit can retrieve the second message data, or at least a portion thereof. Examples are discussed herein, e.g., with reference to operations 614, 618, or 910. Operations 912 and 914 can be performed in either relative order, or at least partly concurrently. As noted above with reference to operation 708, operations 912 and 914 may be performed by different components, e.g., an app for one of operations 912, 914 and an OS component for the other of operations 912, 914. Accordingly, operations 912 and 914 may be performed in either relative order.

At 916, the control unit can determine that the first message ID 904 matches the second message ID 906. Examples are discussed herein, e.g., with reference to operation 902. Operation 916 can be followed by operation 918.

At 918, the control unit can store either the first message data 806 or the second message data 812 in a datastore. The datastore can include, e.g., at least one CRM 214, 230. For example, control unit can store exactly one of the message data 806, 812 in a file or database record. Operation 918 can be performed, e.g., in response to the determination at operation 916. Storing one, but not both, of message data 806, 812 can save storage space even in situations in which both message data 806, 812 have been downloaded.

### EXAMPLE CLAUSES

Various examples include one or more of, including any combination of any number of, the following example features. Throughout these clauses, parenthetical remarks are for example and explanation, and are not limiting. Parenthetical remarks given in this Example Clauses section with respect to specific language apply to corresponding language throughout this section, unless otherwise indicated.
A: A method comprising, at a network terminal: sending a message comprising message data via non-standalone messaging (NSAM), the message addressed from a first user and addressed to a second user; receiving first error data indicating a failure associated with sending the message; and, in response to receiving the first error data, sending an alternative version of the message via standalone messaging (SAM), the alternative version of the message comprising the message data.
B: The method according to paragraph A, further comprising, before sending the message: sending a copy of the message via NSAM, the copy of the message comprising the message data; and receiving second error data indicating a failure associated with sending the copy of the message; wherein the sending the message is performed in response to receiving the second error data.
C: The method according to paragraph B, wherein the message, the copy of the message, and the alternative version of the message share a common message identifier.
D: The method according to any of paragraphs A-C, further comprising: receiving third error data indicating a failure associated with sending the alternative version of the message; presenting, via a user interface, a notice of the failure associated with sending the alternative version of the message; receiving, via the user interface, a user command associated with the notice; and in response to the user command, retransmitting the message.
E: The method according to paragraph D, wherein retransmitting the message comprises sending a copy of the alternative version of the message via NSAM.
F: The method according to any of paragraphs A-E, wherein the message and the alternative version of the message share a common message identifier.
G: The method according to any of paragraphs A-F, wherein: the method further comprises determining that a second network terminal associated with the second user has Rich Communication Services (RCS) capabilities; and the sending the message via NSAM is performed in response to the determination that the second network terminal has RCS capabilities.
H: The method according to any of paragraphs A-G, further comprising selecting a delivery method for the alternative version based at least in part on the size of the message data, wherein the delivery method is at least one of: a large message mode (LMM) delivery method; a pager mode (PMM) delivery method; a Short Message Service (SMS) delivery method, or a Multimedia Message Service (MMS) delivery method.
I: A method comprising, at a network terminal: receiving a first version of a message via non-standalone messaging (NSAM); initiating a first download of first message data associated with the first version of the message; sending an error message indicating a failure associated with the first download; receiving a second version of the message; downloading second message data associated with the second version of the message; and storing the second message data as first downloaded content.
J: The method according to paragraph I, further comprising: receiving a third version of the message; retrieving third message data associated with the third version of the message; storing the third message data as second downloaded content; determining that a first message ID that is associated with the second version of the message matches a second message ID that is associated with the third version of the message; and in response to the determining, discarding at least the first downloaded content or the second downloaded content.
K: The method according to paragraph I or J, further comprising: receiving a third version of the message; determining that a first message ID that is associated with the second version of the message matches a second message ID that is associated with the third version of the message; and in response to the determining, removing the first downloaded content from a memory of the network terminal.
L: The method according to paragraph K, wherein the second version of the message is received before the third version of the message.
M: The method according to any of paragraphs I-L, wherein the second version of the message is received via one of: standalone messaging (SAM), or a push notification.
N: The method according to paragraph M, wherein the second version of the message is received via pager-mode messaging (PMM) and comprises one of: a Rich Communication Services (RCS) pager-mode message; a Short Message Service (SMS) message, or a Multimedia Message Service (MMS) message.
O: The method according to paragraph M or N, wherein the second version of the message is received via a push notification and the method further comprises downloading the second message data from a server via a Representational State Transfer (REST) API at an endpoint Uniform Resource Identifier (URI) associated with the push notification.
P: The method according to any of paragraphs M-O, wherein: the second version of the message is received via a push notification; the push notification comprises the second message data; and the retrieving comprises extracting the second message data from the second version of the message.
Q: The method according to any of paragraphs I-P, wherein: the second version of the message is received via SAM; the NSAM comprises a first Rich Communication Services (RCS) protocol; and the SAM comprises a second RCS protocol.
R: A method comprising, at a network terminal: receiving a first version of a message, the first version of the message associated with first message data; subsequently, receiving a second version of the message, the second version of the message associated with second message data; and initiating retrieval of the first message data.
S: The method according to paragraph R, further comprising: determining that the retrieval of the first message data has failed; and in response, retrieving the second message data.
T: The method according to paragraph R or S, further comprising: completing retrieval of the first message data; retrieving the second message data; determining that a first message ID that is associated with the first version of the message matches a second message ID that is associated with the second version of the message; and in response, storing either the first message data or the second message data in a datastore.
U: The method according to any of paragraphs R-T, further comprising retrieving the first message data by fetching the first message data from a message server indicated in the first version of the message.
V: The method according to any of paragraphs R-U, further comprising, before retrieving the first message data, determining that a message ID associated with the first version of the message matches a message ID associated with the second version of the message.
W: A method comprising, at a network terminal: sending (operation three hundred two) a message comprising message data via non-standalone messaging (NSAM), the message addressed from a first user and addressed to a second user; sending (operation three hundred twelve) an alternative version of the message via standalone messaging (SAM), the alternative version of the message comprising the message data; and receiving (operation three hundred eight) first error data indicating a failure associated with sending the message.
X: The method according to paragraph W, wherein the message is sent via RCS and the alternative version of the message is sent to a push-notification system.
Y: The method according to paragraph W or X, further comprising, before sending the message: sending a copy of the message via NSAM, the copy of the message comprising the message data; and receiving second error data indicating a failure associated with sending the copy of the message; wherein the sending the message is performed in response to receiving the second error data.
Z: The method according to any of paragraphs W-Y, further comprising: receiving third error data indicating a failure associated with sending the alternative version of the message; presenting, via a user interface, a notice of the failure associated with sending the alternative version of the message; receiving, via the user interface, a user command associated with the notice; and in response to the user command, retransmitting the message.
AA: The method according to paragraph Z, wherein retransmitting the message comprises sending a copy of the alternative version of the message via NSAM.
AB: The method according to any of paragraphs W-AA, wherein the message and the alternative version of the message share a common message identifier.
AC: The method according to any of paragraphs W-AB, wherein: the method further comprises determining that a second network terminal associated with the second user has Rich Communication Services (RCS) capabilities; and the sending the message via NSAM is performed in response to the determination that the second network terminal has RCS capabilities.
AD: The method according to any of paragraphs W-AC, further comprising selecting a delivery method for the alternative version based at least in part on the size of the message data, wherein the delivery method is at least one of: a large message mode (LMM) delivery method; a pager mode (PMM) delivery method; a Short Message Service (SMS) delivery method, or a Multimedia Message Service (MMS) delivery method.
AE: A computer-readable medium, e.g., a computer storage medium, having thereon computer-executable instructions, the computer-executable instructions upon execution configuring a computer to perform operations as any of paragraphs A-H, I-Q, R-V, or W-AD recites.
AF: A device comprising: a processor; and a computer-readable medium, e.g., a computer storage medium, having thereon computer-executable instructions, the computer-executable instructions upon execution by the processor configuring the device to perform operations as any of paragraphs A-H, I-Q, R-V, or W-AD recites.
AG: A system comprising: means for processing; and means for storing having thereon computer-executable instructions, the computer-executable instructions including means to configure the system to carry out a method as any of paragraphs A-H, I-Q, R-V, or W-AD recites.
AH: A network terminal configured to perform the operations recited in any of paragraphs A-H, I-Q, R-V, or W-AD.
AI: Any of the foregoing, wherein the listed operations are performed in the order recited.

### CONCLUSION

Various aspects include fallback techniques to improve real-time messaging. Various aspects retry RCS or SIP NSAM (e.g., Session Mode messaging) as SAM (e.g., Pager-Mode messaging) in the absence of a transfer-success indication, e.g., at the RCS or SIP level. Various aspects offer manual retry absent a success indication of the Pager-Mode fallback. In contrast to existing techniques which may not notify the sender or receiver of a failure, or may only notify the sender of a failure and suggest a manual retry, in some examples the initial retry is automatic and failure of NSAM is hidden from the end user unless the SAM fallback also fails. Various aspects include deduplication logic so that only a single copy of the message is stored regardless of the messaging mode by which the message is received, and regardless of the number of received copies or versions of the message or of message data associated with the message.

Example components and data transmissions in FIGS. 1-2 and example operations in the process diagrams of FIGS. 3-9 represent one or more operations that can be implemented in hardware, software, or a combination thereof to transmit or receive described data or conduct described exchanges. In the context of software, the illustrated operations and exchanges represent computer-executable instructions that, when executed by one or more processors, cause the processors to transmit or receive the recited data. Generally, computer-executable instructions, e.g., stored in program modules that define operating logic, include routines, programs, objects, modules, components, data structures, and the like that perform particular functions or implement particular abstract data types. Except as expressly set forth herein, the order in which the transmissions or operations are described is not intended to be construed as a limitation, and any number of the described transmissions or operations can be combined in any order and/or in parallel to implement the processes. Moreover, structures or operations described with respect to a single server or device can be performed by each of multiple devices, independently or in a coordinated manner, except as expressly set forth herein.

Other architectures can be used to implement the described functionality, and are intended to be within the scope of this disclosure. Furthermore, although specific distributions of responsibilities are defined above for purposes of discussion, the various functions and responsibilities might be distributed and divided in different ways, depending on particular circumstances. Similarly, software can be stored and distributed in various ways and using different means, and the particular software storage and execution configurations described above can be varied in many different ways. Thus, software implementing the techniques described above can be distributed on various types of computer-readable media, not limited to the forms of memory that are specifically described.

The word "or" and the phrase "and/or" are used herein in an inclusive sense unless specifically stated otherwise. Accordingly, conjunctive language such as, but not limited to, at least one of the phrases "X, Y, or Z," "at least X, Y, or Z," "at least one of X, Y or Z," "one or more of X, Y, or Z," and/or any of those phrases with "and/or" substituted for "or," unless specifically stated otherwise, is to be understood as signifying that an item, term, etc., can be either X, or Y, or Z, or a combination of any elements thereof (e.g., a combination of XY, XZ, YZ, and/or XYZ). Any use herein of phrases such as "X, or Y, or both" or "X, or Y, or combinations thereof' is for clarity of explanation and does not imply that language such as "X or Y" excludes the possibility of both X and Y, unless such exclusion is expressly stated.

As used herein, language such as "one or more Xs" shall be considered synonymous with "at least one X" unless otherwise expressly specified. Any recitation of "one or more Xs" signifies that the described steps, operations, structures, or other features may, e.g., include, or be performed with respect to, exactly one X, or a plurality of Xs, in various examples, and that the described subject matter operates regardless of the number of Xs present, as long as that number is greater than or equal to one.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example.

Although some features and examples herein have been described in language specific to structural features and/or methodological steps, it is to be understood that the appended claims are not necessarily limited to the specific features or steps described herein. Rather, the specific features and steps are disclosed as preferred forms of implementing the claimed aspects. For example, network 206, processors 212 and 228, and other structures or systems described herein for which multiple types of implementing devices or structures are listed can include any of the listed types, and/or multiples and/or combinations thereof.

Moreover, this disclosure is inclusive of combinations of the aspects described herein. References to "a particular aspect" (or "embodiment" or "version") and the like refer to features that are present in at least one aspect. Separate references to "an aspect" (or "embodiment") or "particular aspects" or the like do not necessarily refer to the same aspect or aspects; however, such aspects are not mutually exclusive, unless so indicated or as are readily apparent to one of skill in the art. The use of singular or plural in referring to "method" or "methods" and the like is not limiting.

It should be emphasized that many variations and modifications can be made to the above-described examples, the elements of which are to be understood as being among other acceptable examples. All such modifications and variations are intended to be included herein within the scope of this disclosure and protected by the following claims. Moreover, in the claims, any reference to a group of items provided by a preceding claim clause is a reference to at least some of the items in the group of items, unless specifically stated otherwise. This document expressly envisions alternatives with respect to each and every one of the following claims individually, in any of which claims any such reference refers to each and every one of the items in the corresponding group of items. Furthermore, in the claims, unless otherwise explicitly specified, an operation described as being "based on" a recited item can be performed based on only that item, or based at least in part on that item. This document expressly envisions alternatives with respect to each and every one of the following claims individually, in any of which claims any "based on" language refers to the recited item(s), and no other(s). Additionally, in any claim using the "comprising" transitional phrase, recitation of a specific number of components (e.g., "two Xs") is not limited to embodiments including exactly that number of those components, unless expressly specified (e.g., "exactly two Xs"). However, such a claim does describe both embodiments that include exactly the specified number of those components and embodiments that include at least the specified number of those components.

Some operations of example processes or devices herein are illustrated in individual operations and logical flows thereof, and are summarized with reference to those operations. The order in which the operations are described is not intended to be construed as a limitation unless otherwise indicated. Any number of the described operations can be executed in any order, combined in any order, subdivided into multiple sub-operations, or executed in parallel to implement the described processes. For example, in alternative implementations included within the scope of the examples described herein, elements or functions can be deleted, or executed out of order from that shown or discussed, including substantially synchronously or in reverse order.

## Claims

1. A method comprising, at a network terminal:
sending a message comprising message data via non-standalone messaging (NSAM), the message addressed from a first user and addressed to a second user;
receiving first error data indicating a failure associated with sending the message; and
in response to receiving the first error data, sending an alternative version of the message via standalone messaging (SAM), the alternative version of the message comprising the message data.

2. The method according to claim 1, further comprising, before sending the message:
sending a copy of the message via NSAM, the copy of the message comprising the message data; and
receiving second error data indicating a failure associated with sending the copy of the message;
wherein the sending the message is performed in response to receiving the second error data.

3. The method according to claim 1 or 2, further comprising:
receiving third error data indicating a failure associated with sending the alternative version of the message;
presenting, via a user interface, a notice of the failure associated with sending the alternative version of the message;
receiving, via the user interface, a user command associated with the notice; and
in response to the user command, retransmitting the message.

4. The method according to claim 3, wherein retransmitting the message comprises sending a copy of the alternative version of the message via NSAM.

5. The method according to any of claims 1-4, wherein the message and the alternative version of the message share a common message identifier.

6. The method according to any of claims 1-5, wherein:
the method further comprises determining that a second network terminal associated with the second user has Rich Communication Services (RCS) capabilities; and
the sending the message via NSAM is performed in response to the determination that the second network terminal has RCS capabilities.

7. The method according to any of claims 1-6, further comprising selecting a delivery method for the alternative version based at least in part on the size of the message data, wherein the delivery method is at least one of:
a large message mode (LMM) delivery method;
a pager mode (PMM) delivery method;
a Short Message Service (SMS) delivery method, or
a Multimedia Message Service (MMS) delivery method.

8. A method comprising, at a network terminal:
receiving a first version of a message via non-standalone messaging (NSAM);
initiating a first download of first message data associated with the first version of the message;
sending an error message indicating a failure associated with the first download;
receiving a second version of the message;
downloading second message data associated with the second version of the message; and
storing the second message data as first downloaded content.

9. The method according to claim 8, further comprising:
receiving a third version of the message;
retrieving third message data associated with the third version of the message;
storing the third message data as second downloaded content;
determining that a first message ID that is associated with the second version of the message matches a second message ID that is associated with the third version of the message; and
in response to the determining, discarding at least the first downloaded content or the second downloaded content.

10. The method according to claim 8 or 9, further comprising:
receiving a third version of the message;
determining that a first message ID that is associated with the second version of the message matches a second message ID that is associated with the third version of the message; and
in response to the determining, removing the first downloaded content from a memory of the network terminal.

11. The method according to any of claims 8-10, wherein the second version of the message is received via one of:
standalone messaging (SAM),
a push notification,
a Rich Communication Services (RCS) pager-mode message;
a Short Message Service (SMS) message, or
a Multimedia Message Service (MMS) message.

12. The method according to claim 11, wherein the second version of the message is received via a push notification and the method further comprises:
downloading the second message data from a server via a Representational State Transfer (REST) API at an endpoint Uniform Resource Identifier (URI) associated with the push notification; or
extracting the second message data from the second version of the message.

13. The method according to any of claims 8-12, wherein:
the second version of the message is received via SAM;
the NSAM comprises a first Rich Communication Services (RCS) protocol; and
the SAM comprises a second RCS protocol.

14. A method comprising, at a network terminal:
receiving a first version of a message, the first version of the message associated with first message data;
subsequently, receiving a second version of the message, the second version of the message associated with second message data; and
initiating retrieval of the first message data;
determining that the retrieval of the first message data has failed; and
in response, retrieving the second message data.

15. The method according to claim 14, further comprising:
completing retrieval of the first message data;
retrieving the second message data;
determining that a first message ID that is associated with the first version of the message matches a second message ID that is associated with the second version of the message; and
in response, storing either the first message data or the second message data in a datastore.
